# EUROPEAN PATENT APPLICATION

(11) **EP 4 757 188 A1**
(43) Date of publication of application: **10.06.2026**
(21) Application number: 24217131.2
(22) Date of filing: 03.12.2024
(51) Int. Cl.: H04B 1/10, H04B 7/145, H04B 7/185

(54) **SYSTEM AND METHOD FOR MONITORING A WIRELESS LINK**

(71) Applicant: Rohde & Schwarz GmbH & Co. KG, 81671 München (DE)
(72) Inventor: WOYWOD, Martin, 80805 Munich (DE); JUNGBAUER, Benjamin, 94505 Bernried (DE)
(74) Representative: Isarpatent

(57) **Abstract**

The present invention provides a system for monitoring a wireless link, comprising a deflector device including a deflector and a control unit, wherein the deflector is configured to passively deflect a part of a signal of the wireless link incident from a first direction to a second direction, wherein the control unit is configured to control the orientation of the deflector, and a processing device configured to receive and process the deflected signal and visualize a content and/or a HF parameter of the signal to a user. The invention further provides a corresponding method for monitoring a wireless link.

## Description

### TECHNICAL FIELD OF THE INVENTION

The present disclosure relates to a system and method for monitoring a wireless link.

### TECHNICAL BACKGROUND

Monitoring a wireless communication link or channel sent by a transmitter to a receiver may be conducted to ensure the integrity, quality, and reliability of the communication link. By placing a monitoring platform within the link area between the transmitter and the receiver, it is possible to intercept, analyze, and visualize the signal in real-time. A possible scenario is an up link from a ground station as the transmitter to a satellite as a relay or receiver. Such an interception of a signal of the wireless communication link allows for the detection of any anomalies, interferences, or degradations in the signal, thereby enabling timely corrective actions to maintain optimal communication performance. Furthermore, the wireless communication link may be eavesdropped by such a platform and its content extracted and visualized.

A typical platform for intercepting the signal may be a mobile platform, such as a vehicle or a drone, which is placed within an area of the link. The platform may carry equipment for receiving and analyzing the signal of the wireless link. For a drone, the platform may be rather large due to the weight of such equipment, requiring powerful rotors and thus large batteries.

JP 2018/072880 A describes flying object monitoring system for performing for warning about a collision or a crash of a flying object such as a drone.

The problem to be solved is thus how to reduce the size of the platform for monitoring a wireless link.

### SUMMARY OF THE INVENTION

According to the invention, this problem is solved in each case by the subject matters of the independent claims.

According to a first aspect of the invention, a device for monitoring a wireless link is provided. The device comprises a deflector device including a deflector and a control unit, wherein the deflector is configured to passively deflect a signal of the wireless link incident from a first direction to a second direction, wherein the control unit is configured to control the orientation of the deflector, and a processing device configured to receive and process the deflected signal and visualize a content and/or a HF parameter of the signal to a user.

According to a second aspect of the invention, a method for monitoring a wireless link is provided. The method comprises detecting a part of a signal of the wireless link incident from a first direction on a deflector device, controlling the orientation of a deflector of the deflector device such that the detected signal is reflected to a second direction towards a processing device, receiving the signal by the processing device, processing of the received signal to extract a content and/or a HF parameter of the signal by the processing device, and displaying the content and/or a HF parameter of the signal to a user.

A fundamental idea of the present invention is to provide a passive platform, which is able to intercept the wireless link and sent a part of a signal of the wireless link towards the processing device. The part of the signal is strong enough to be captured and analyzed by the processing device. The processing device can extract the content of the captured part of the signal in real time. Alternatively or in addition, HF (High Frequency) parameters such as a bandwidth or a frequency range of the signal may be extracted and processed in real time. The content and/or HF parameters can be displayed to a user after transmission to the location of the user, which can be near the processing device or another location.

The passive platform is a deflector device, which comprises a deflector for passively relaying the signal to the processing device. The deflector may be a simple reflector suitable to reflect a signal of a particular frequency range with high reflectivity. Another option is a diffractor or diffractive element, which is able to diffract the signal of the frequency range towards another direction. This deflection, e.g. reflection or diffraction, is directionally dependent on the orientation of the deflector. A control unit onboard the deflector device is able to precisely control the orientation of the deflector. In this way, the deflector device can relay the signal to the processing device even by a changing direction of the incoming signal (first direction) and/or the position of the receiver (processing device).

The orientation of the deflector can be an azimuth angle and/or elevation angle of the deflector onboard the deflector device. These angles between the line of sight of the signal to be analyzed and the line of sight to the ground station may be twice the angle between the perpendicular to the wireless link deflector and the line of sight to the ground station. The orientation of the deflector device thus results from the geometry of the application.

By this system, satellite monitoring or satellite intelligence and, in more general, directional wireless links can be monitored with a lightweight platform, i.e. the deflector device. The present invention thus proposes a system, which is small, light, and inconspicuous that enables long flight duration and a fast search of large areas. In particular, monitoring of non-stationary satellite links such as satellite links sent from and especially to low-stationary orbit (LEO) can be monitored effectively.

Advantageous embodiments and further developments emerge from the description with reference to the figures.

According to an embodiment of the invention, the deflector device further includes a communication unit configured to receive the control signal for controlling the orientation of the deflector. In this way, the deflector device can be controlled remotely so that related control equipment can be avoided, which further reduces the weight of the deflector device.

According to an embodiment of the invention, the system further comprises a controller configured to calculate the orientation of the deflector for deflecting the signal from the first direction towards the processing device. The control signal can be calculated by the position of the transmitter or the first direction and the position of the processing device. Once these are known, the orientation, which can be an azimuth angle and elevation angle of the deflector onboard the deflector device, is calculated by the controller and transmitted to the control unit onboard the processing device for controlling the deflector.

According to an embodiment of the invention, the system further comprises a communication device for receiving a command from a pilot and generating a corresponding control signal. In this way, the control signal is created by a manual input, which provides improved robustness in case of an unexpected event. In related embodiments, the deflector device includes at least one camera and images captured by the camera are sent to the communication device back to the pilot to support the pilot in steering the deflector device.

According to an embodiment of the invention, the controller and/or the communication device are installed on the deflector device. This means that the controller can be installed on the deflector device and the communication device elsewhere, or the communication device can be installed on the deflector device and the controller elsewhere. Preferably, both the controller and the communication device are installed on the deflector device. In this way, the commands of the pilot are sent in the direction of the deflector device, where these can be processed by the controller for determining the orientation of the deflector.

According to an embodiment of the invention, the controller and/or the communication device are arranged apart from the deflector device. This means that the controller and/or the communication device can be situated apart from the deflector device, so that the control signal can be created and transmitted to the deflector device. In this way, the control signal can be directly applied to control the deflector by the control unit. For this purpose, a simple antenna on the deflector device is enough to receive the control signal, which can be directly relayed to the control unit.

According to an embodiment of the invention, the deflector device further includes a sensor unit configured to detect the signal and determine the first direction. The sensor unit thus measures the first direction with suitable equipment for the respective frequency range of the wireless link. Measuring the first direction directly onboard the deflector device leads to an improvement of the precision of the reflected signal towards the processing device.

According to an embodiment of the invention, the deflector device is configured as an aerial platform. An aerial platform increases the flexibility for the deflector device to relay a part of the signal to the processing device. Furthermore, an aerial platform, such as a drone, can be lightweight and inconspicuous allowing effective intercepting and eavesdropping wireless links effectively.

According to an embodiment of the invention, the deflector device comprises a flight controller configured to control a drive unit of the aerial platform. The fight controller thus can control means for the aerial platform to fly. In the case of a drone, the flight controller can control the rotation speed and orientation of the rotors for flying on a calculated flight path. The flight controller may further comprise a Global Navigation Satellite System (GNSS) GNSS sensor, which provides information about the position of the aerial platform. Base on such information, a flight plan for the aerial platform may be calculated, e.g. by the controller.

According to an embodiment of the invention, the controller is configured to calculate the control signal and/or a flight path of the aerial platform autonomously. This means the controller can function autonomously to calculate the control signal or to calculate the flight path. In a preferred embodiment, both, the controller can autonomously calculate the control signal depending on the flight path, which is calculated autonomously as well. In this case, the deflector device does not require receiving commands from a pilot or another equipment, making it invisible to other radio-monitoring devices.

According to an embodiment of the invention, the processing device comprises a detection unit configured to receive the deflected wireless signal on a selected frequency range, a processing unit for extracting the content of the received signal and a displaying unit for displaying the content and/or the HF parameter of the signal for the user. These units support the processing device to receive the signal of a predetermined frequency range, process the signal for its content and/or HF parameters and visualize the content and/or HF parameters of the signal. In this way, a real-time monitoring of the wireless link can be achieved effectively.

According to an embodiment of the invention, the system further comprises a ground station, wherein the ground station includes the processing device. The processing device is thus integrated into a ground station, where the signal is processed and visualized. The ground station may comprise means to direct a receiving antenna towards the deflector device for tracking.

According to an embodiment of the invention, the wireless link is configured as a radio link, and the deflector configured as a radio wave reflector. Generally, a radio link can be any link with a frequency band between 3 Hz and 3 THz. Preferred frequency bands are the VHF, UHF and SHF bands between 30 MHz and 50 GHz, in particular between 12 GHz and about 18 GHz (Kᵤ band). Wireless links such a satellite internet or telephone links can be monitored in this way. A radio reflector may be composed of a suitable material, preferably including a coating, for the respective frequency range to optimize the deflection efficiency so that a strong signal is obtained at the processing device.

According to an embodiment of the invention, the wireless link is configured as an optical link, and the deflector configured as an optical mirror. Generally, optical links are to be understood broadly to have a frequency between 3 THz and about 3 10¹⁶ Hz, in particular up to 3 10¹⁵ Hz, which corresponds to a wavelength of 100 nm below which the atmosphere becomes untransparent. The optical mirror is typically coated with a suitable material, such as sold or silver, for increased reflectivity so that a strong signal is obtained at the processing device. A diffractor, such as a prism, may be applied in alternative to the optical mirror.

The above embodiments and further developments can be combined with each other as desired, if useful. In particular, all features of the system for monitoring a wireless signal are transferable to the corresponding method for monitoring a wireless signal, and vice versa. Further possible embodiments, further developments and implementations of the invention also comprise combinations, not explicitly mentioned, of features of the invention described before or below with respect to the embodiments. In particular, the skilled person will thereby also add individual aspects as improvements or additions to the respective basic form of the present invention.

### BRIEF SUMMARY OF THE DRAWINGS

The present invention is explained more specifically below on the basis of the exemplary embodiments indicated in the schematic figures, in which:
- Figure 1: shows a schematic illustration of a system for monitoring a wireless link according to a further embodiment according to the invention;
- Figure 2: shows a schematic illustration of a system for monitoring a wireless link according to a further embodiment according to the invention;
- Figure 3: shows a schematic illustration of a system for monitoring a wireless link according to a further embodiment according to the invention;
- Figure 4: shows a schematic illustration of a system for monitoring a wireless link according to a further embodiment according to the invention;
- Figure 5: shows a schematic illustration of a system for monitoring a wireless link according to a further embodiment according to the invention; and
- Figure 6: shows a schematic flowchart of a method for monitoring a wireless link according to an embodiment according to the invention.

In the figures of the drawing, elements, features and components which are identical, functionally identical and of identical action are denoted in each case by the same reference designations unless stated otherwise.

### DESCRIPTION OF EXEMPLARY EMBODIMENTS

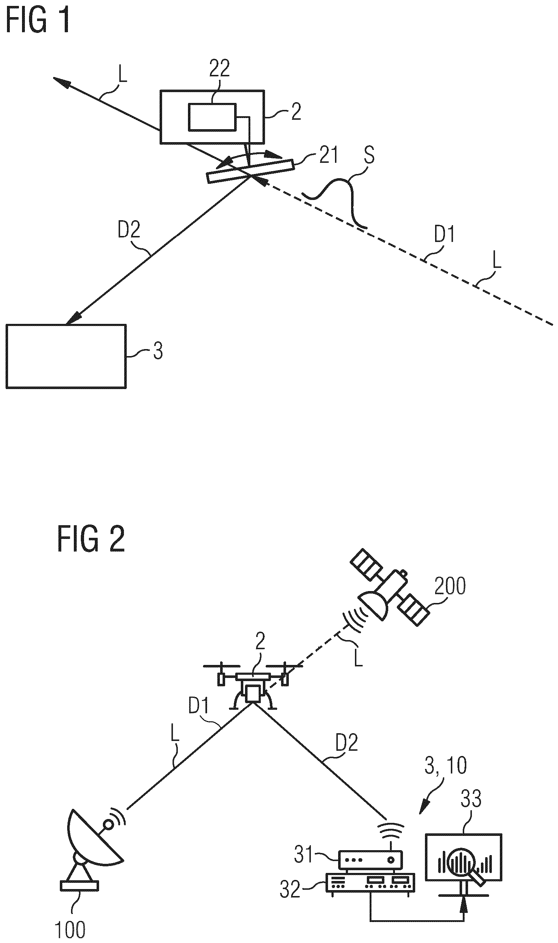

Figure 1 shows a schematic illustration of a system for monitoring a wireless link according to a further embodiment according to the invention.

The system 1 for monitoring a wireless link L comprises a deflector device 2 and a processing device 3. The deflector device 2 includes a deflector 21 and a control unit 22. The deflector 21 is configured to passively deflect a part of a signal S of the wireless link L incident from a first direction D1 to a second direction D2. In Fig. 1, it can be seen that the processing device 3 is positioned along the second direction D2 from the deflector device 2 for receiving the deflected signal S.

In some embodiments, the deflector 21 is a simple reflector suitable to reflect the signal S of a particular frequency range with high reflectivity. In further embodiments, the deflector 21 is configured as a diffractor, which is able to diffract the signal S of the particular frequency range towards another direction. This deflection, e.g. reflection or diffraction, is directionally dependent by the orientation of the deflector.

The control unit 22 is configured to control the orientation of the deflector 21, so that an azimuth angle and elevation angle of the deflector 21 can be controlled by the control unit 22 over time. Due to the control of the orientation of the deflector 21 by the control unit 22, the deflector device can relay the signal to the processing device even by a changing direction of the incoming signal S and/or the position of the processing device 3.

The processing device 3 is configured to receive and process the deflected signal S and visualize a content and/or a HF parameter of the signal S to a user. HF parameter may be, for example, a frequency range or a bandwidth of the signal S. The processing device thus may have corresponding equipment for receiving and processing the signal S, as will be described further below.

Generally, the wireless link L is configured as a radio link, as an optical link or any other suitable link. The invention is even applicable to an acoustic link having e.g. ultrasonic signals.

In embodiments of the system configured for radio links, the frequency of the wireless link L is generally between 3 Hz and 3 THz, preferably in the VHF, UHF and SHF bands between 30 MHz and 50 GHz, in particular between 12 GHz and about 18 GHz (Kᵤ band). In this case, the deflector 21 is configured as a radio wave reflector, which means that it is composed of suitable material, e.g. Al, CU, Ag, Au, Graphene, or others. Multiplelayer combinations of materials with different conductivities are also thinkable. In preferred embodiments, the radio wave reflector includes a coating, which can be a protective coating for protecting the deflector 21 from environmental influences and/or a coating for increased reflectivity.

In further embodiments, the wireless link L is configured as an optical link, wherein the frequency of the optical link may be between 3 THz and about 3 10¹⁶ Hz. In more preferred embodiments, the frequency of the optical links is about 3 10¹⁵ Hz. which corresponds to a wavelength of 100 nm below which the atmosphere becomes opaque. In preferred embodiments, the optical link is in the infrared at about 1300 nm or 1550 nm wavelength. In some of these embodiments, the deflector 21 is configured as an optical mirror. The optical mirror is typically coated with a suitable material, such as sold or silver, for increasing its reflectivity. Furthermore, a protective coating can be added for protecting the deflector 21 from environmental influences. In alternative or additional embodiments, the deflector includes a diffractor, such as a prism, for diffracting the optical signal.

Figure 2 shows a schematic illustration of a system 1 for monitoring a wireless link L according to a further embodiment according to the invention. The present embodiment is based on and compatible with the previous embodiment introduced above with reference to Fig. 1.

In this embodiment, the deflector device 2 is configured as an aerial platform. The wireless link L is sent from a ground station as a transmitter 100 to a receiver 200, which is configured as a satellite. In the shown embodiment, the system 1 comprises a ground station 10, which includes the processing device 3. In some embodiments, the ground station 10 may include a directional antenna 51 for tracking the aerial platform.

The processing device 3 comprises a detection unit 31 configured to receive the deflected signal S on a selected frequency range, a processing unit 32 for extracting the content and/or HF parameters of the received signal S and a displaying unit 33 for displaying the content and/or HF parameters of the signal S for the user. The detection unit 31 thus includes a receiving antenna for receiving the deflected part of the signal S of the wireless link L. The processing unit 32 includes suitable hardware for extracting the content or a HF parameter of the signal S. This may optionally include a demodulator for demodulating an encoded signal S, a processor, memory for storing the content and a suitable computer program for extracting the content of the signal S, or a spectrum analyzer for determining at least some of the HF parameters. The content and/or the HF parameters is then visualized by displaying on a display performed by the displaying unit 33.

It is noted that the wireless link L is not disrupted by the presence of the deflector device 2, since only a rather small part of the signal S is deflected towards the processing device, but a major signal strength is still arriving at the receiver 200.

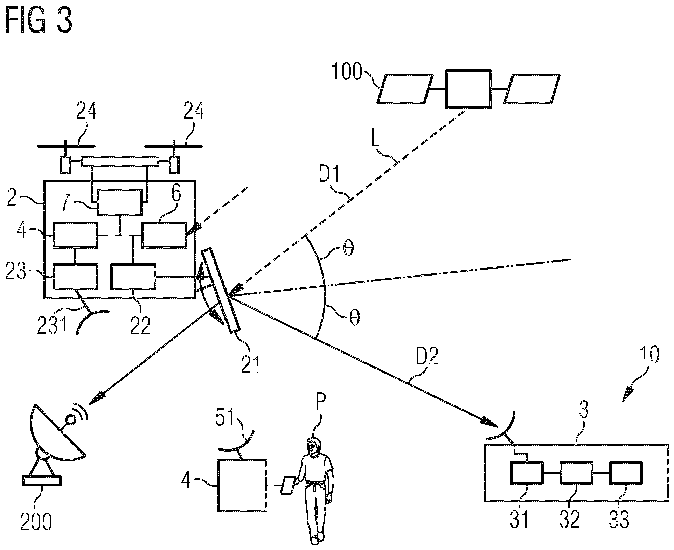

Figure 3 shows a schematic illustration of a system for monitoring a wireless link according to a further embodiment according to the invention. The present embodiment is based on and compatible with the previous embodiments introduced above with reference to Fig. 1 and 2.

In this embodiment, the wireless link L is sent from a satellite as a transmitter 100 to a ground station, which is configured as a receiver 200. The deflector device 2 further includes a communication unit 23 configured to receive a control signal for controlling the orientation of the deflector 21. The communication unit 23 includes an antenna 231. In this embodiment, the control signal is received from the communication device 5, which generates the control signal by processing commands from a pilot P and which sends the control signal by an antenna 51 towards the deflector device 2. In this embodiment, both antennas 231 and 51 are configured as directionally dependent dish-like antennas, which may have corresponding active tracking units to keep facing to each other for a particular strong communication signal. In further embodiments, at least one of the antennas 231, 51 are configured as direction independent antennas, which do not require any active tracking of the antennas 231, 51.

The received control signal is processed in a controller 4. The controller 4 is configured to calculate the orientation of the deflector for deflecting the signal from the first direction towards the processing device. The controller 4 thus typically comprises a processor, a memory, a corresponding computer program and a buffer for temporarily storing the calculated orientation values. The computer program may include artificial intelligence to predict certain parameters, such as e.g. the movement of the transmitter 100. Data from past flights may be used to train the artificial intelligence.

In some embodiments, the correct orientation of the deflector 21 is calculated by the position of the transmitter 100 or the first direction L1 and the position of the processing device 3. Once this information was known, the orientation, which can be an azimuth angle and elevation angle of the deflector 21 onboard the deflector device 2, is calculated by the controller 4 and transmitted to the control unit 22 for controlling the deflector 21. In the embodiment shown in Fig. 3, the controller 4 is positioned onboard the deflector device 2, while the communication device 5 is positioned near the pilot P on the ground. In further embodiments, the communication device 5 is omitted or integrated in the communication unit 23 onboard the deflector device 2, so that only the commands of the pilot are transmitted from the ground to the communication device 5 or communication unit 23 onboard the deflector device 2 and relayed .

The deflector device 2 further includes a sensor unit 6 configured to detect the signal S and determine the first direction D1. The sensor unit 6 thus measures the first direction with direction sensitive equipment for the respective frequency range of the wireless link L. The sensor unit 6 thus provides data about the direction of the wireless link L. These data are processed in real time by the control unit 22 and/or the controller 4 for calculating and controlling the orientation of the deflector 21. In further embodiments, information about the direction of the wireless link L is obtained apart from the deflector device 2 and sent by a communication link to the communication unit 23, which relays this information to the controller 4 and the control unit 22.

Furthermore, the deflector device 2 comprises a flight controller 7. The flight controller 7 is configured to control a drive unit 24 of the aerial platform 2. The flight controller 7 thus can control means for the aerial platform to fly. In embodiments of the system 1, in which the deflector device 2 is configured as a drone, the drive unit 24 comprises rotors 24 and the flight controller 7 can also control the rotation speed and orientation of the rotors 24 for flying on a calculated flight path.

The flight path may be provided by the pilot P or by the controller 4, which may consider an optimum position for the deflection of the signal S. A flight plan can be chosen to look for a beneficial position of the deflector device for effectively deflecting the signal towards the processing device. For example, the deflector might have a preferred angular range of deflection, such as e.g. around 90° angle of incidence Θ, for which it can effectively deflect the signal. Furthermore, by achieving additional information about the environment, a better position of the deflector device may be identified at which it might be more inconspicuous. In addition, environmental data, such as wind speed and direction, might be available. Based on this information, the controller may then calculate a new position and a possible flight path for the deflector device. In preferred embodiments, the flight controller 7 comprises a Global Navigation Satellite System, GNSS,GNSS sensor. A corresponding GNSS signal is sent to the controller 4 for calculating the correct orientation of the deflector and calculating the flight path. In some embodiments, the GNSS signal is sent to the Pilot P as well.

Furthermore, the communication unit 23 may also receive further information about the deflector device 2. Besides the GNSS signal, which indicates the precise location of the deflector device 2, information about temperature, energy status of onboard batteries or camera images obtained by corresponding sensors, and information about malfunctions may be obtained and sent to the communication unit 5. Based on this information, the pilot P may then decide whether monitoring should be continued or the deflector device 2 should better return.

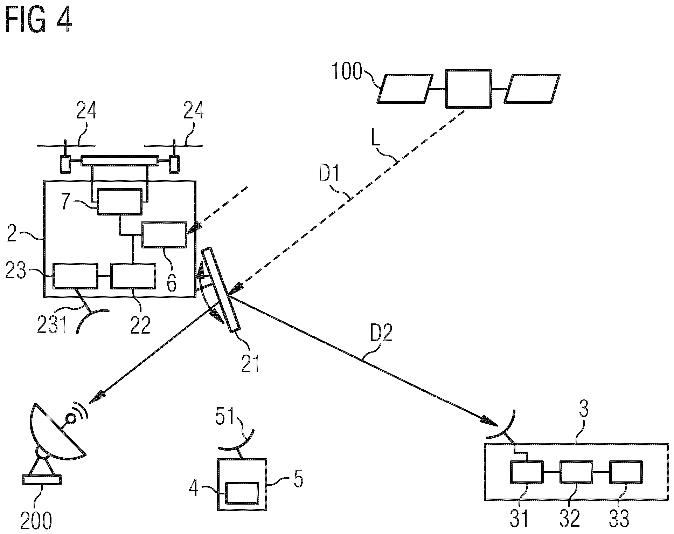

Figure 4 shows a schematic illustration of a system 1 for monitoring a wireless link L according to a further embodiment according to the invention. The present embodiment is based on and compatible with the previous embodiments introduced above with reference to Fig. 1 to 3.

The main difference in this embodiment compared to the embodiment shown in Fig. 3 is that the controller 4 is located apart from the deflector device 2. Therefore, the main processing, which includes the calculation of the orientation of the deflector 21 and the calculation of the flight path of the deflector device 2, is performed on the ground. In this embodiment, the controller 4 is integrated in the communication device 5.

In this embodiment, the controller 4 is configured to calculate the control signal and the flight path autonomously. Therefore, no pilot P is strictly needed. Corresponding control signals are generated in the controller 4 and then sent by the communication device 5 to the communication 23 onboard the deflector device 2, where these are simply relayed to the control unit 22 for controlling the deflector and the flight controller 7 for controlling the movement of the mobile deflector device 2, by controlling the rotors 24 in this case.

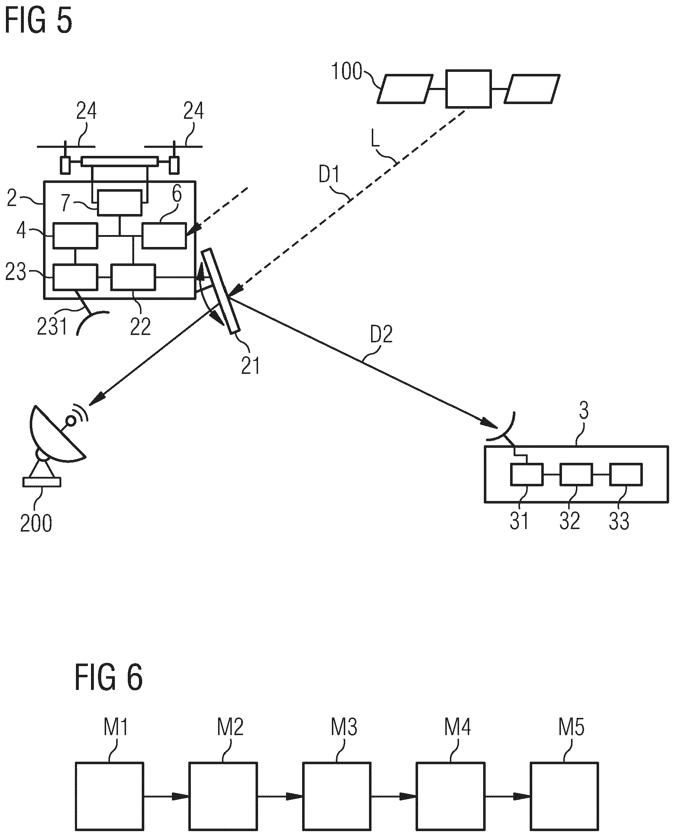

Figure 5 shows a schematic illustration of a system 1 for monitoring a wireless link L according to a further embodiment according to the invention.

In this embodiment, the controller 4 is installed on the deflector device 2. The controller 4 is configured to calculate the control signal autonomously. Furthermore, the flight controller 7 is configured to calculate the flight path autonomously as well. By this configuration, the deflector device 2 can fly autonomously using the GNSS sensor in the flight controller 7, measure the first direction D1 of the incoming wireless link L and reacts autonomously to variations by adapting the flight path and the orientation of the deflector 21. By knowing the position of the processing device 3, the controller 4 can calculate the correct orientation by reading and processing the GNSS signal obtained on the deflector device 2. In further embodiments, a camera is installed on the deflector device 2 providing image information about the position of the processing device 3.

Therefore, in this embodiment, a communication device 5 for a pilot P communicating with the deflector device 2 is not necessarily required. However, in further embodiments, a communication device 5 is arranged on the deflector device 2 or on the ground to receive commands from the pilot P, for example in case of emergency or for returning the platform back to a station. These commands can then be sent by the communication device 5 to the communication unit 23 onboard the deflector device 2.

Figure 6 shows a schematic flowchart of a method for monitoring a wireless link according to an embodiment according to the invention.

In the method for monitoring a wireless link L, a signal S of the wireless link incident from a first direction D1 on a deflector device 2 is detected M1. Furthermore, the orientation of a deflector 21 of the deflector device 2 is controlled M2 such that the detected signal S is reflected to a second direction D2 towards a processing device 3. Then, the signal S is received M3 by the processing device 3. The received signal S is the processed M4 to extract a content and/or a HF parameter of the signal S by the processing device 3. Furthermore, the content and/or the HF parameter of the signal S is displayed M5 to a user.

In the detailed description above, various features have been combined in one or more examples in order to improve the rigorousness of the illustration. However, it should be clear in this case that the above description is of merely illustrative but in no way restrictive nature. It serves to cover all alternatives, modifications and equivalents of the various features and exemplary embodiments. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present invention(s) is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means either or both. Furthermore, characteristics or steps, which have been described may also be used in combination with other characteristics or steps and in any order unless the disclosure or context suggests otherwise. This disclosure hereby incorporates by reference the complete disclosure of any patent or application from which it claims benefit or priority.

### LIST OF REFERENCE SIGNS

- 1: system
- 2: mobile deflector device
- 2: deflector device
- 3: processing device
- 4: controller
- 5: communication device
- 6: sensor unit
- 7: flight controller
- 10: ground station
- 21: deflector
- 22: control unit
- 23: communication unit
- 24: rotors
- 31: detection unit
- 32: processing unit
- 33: displaying unit
- 51: antenna on ground
- 231: antenna on deflector device
- 100: transmitter
- 200: receiver

## Claims

1. System (1) for monitoring a wireless link (L), comprising a deflector device (2) including a deflector (21) and a control unit (22), wherein the deflector (21) is configured to passively deflect a part of a signal (S) of the wireless link incident from a first direction (D1) to a second direction (D2), wherein the control unit (22) is configured to control the orientation of the deflector (21), and
a processing device (3) configured to receive and process the deflected signal (S) and visualize a content and/or a HF parameter of the signal (S) to a user.

2. System (1) according to claim 1, wherein the deflector device (2) further includes a communication unit (23) configured to receive a control signal for controlling the orientation of the deflector (21).

3. System (1) according to claim 1 or 2, further comprising a controller (4) configured to calculate the orientation of the deflector (21) for deflecting the signal (S) from the first direction (D1) towards the processing device (3).

4. System (1) according to any of the previous claims, further comprising a communication device (5) for receiving a command from a pilot (P) and generating a corresponding control signal.

5. System (1) according to claims 3 and 4, wherein the controller (4) and/or the communication device (5) are installed on the deflector device (2).

6. System (1) according to claims 3 and 4, wherein the controller (4) and/or the communication device (5) are arranged apart from the deflector device (2).

7. System (1) according to any of the previous claims, wherein the deflector device (2) further includes a sensor unit (6) configured to detect the signal (S) and determine the first direction (D1).

8. System (1) according to any of the preceding claims, wherein the deflector device (2) is configured as an aerial platform.

9. System (1) according to claims 8, wherein the deflector device (3) comprises a flight controller (7) configured to control a drive unit (24) of the aerial platform (2), wherein the flight controller (7) in particular comprises a Global Satellite Navigation System, GNSS, sensor.

10. System (1) according to claim 3 and 8, wherein the controller (4) is configured to calculate the control signal and/or a flight path of the aerial platform autonomously.

11. System (1) according to any of the preceding claims, wherein the processing device (3) comprises a detection unit (31) configured to receive the deflected wireless signal on a selected frequency range, a processing unit (32) for extracting the content and/or the HF parameter of the received signal (S) and a displaying unit (33) for displaying the content and/or the HF parameter of the signal (S) for the user.

12. System (1) according to any of the preceding claims, further comprising a ground station (10), wherein the ground station (10) includes the processing device (3).

13. System (1) according to any of the preceding claims, wherein the wireless link (L) is configured as a radio link, and the deflector (21) configured as a radio wave reflector.

14. System (1) according to any of claims 1 to 12, wherein the wireless link (L) is configured as an optical link, and the deflector (21) configured as an optical mirror.

15. Method for monitoring a wireless link (L), comprising detecting (M1) a signal (S) of the wireless link incident from a first direction (D1) on a deflector device (2), controlling (M2) the orientation of a deflector (21) of the deflector device (2) such that the detected signal (S) is reflected to a second direction (D2) towards a processing device (3),
receiving (M3) the signal (S) by the processing device (3), processing (M4) of the received signal (S) to extract a content and/or a HF parameter of the signal (S) by the processing device (3), and
displaying (M5) the content and/or the HF parameter of the signal (S) to a user.
